# EUROPEAN PATENT SPECIFICATION

(11) **EP 2 859 719 B1**
(45) Date of publication and mention of the grant of the patent: **22.05.2019**
(21) Application number: 13727953.5
(22) Date of filing: 12.06.2013
(51) Int. Cl.: H04N 5/265, H04N 5/272

(54) **APPARATUS AND METHOD FOR IMAGE CONTENT REPLACEMENT**
VORRICHTUNG UND VERFAHREN ZUR INHALTSERSETZUNG IN BILDERN
APPAREIL ET PROCÉDÉ DE REMPLACEMENT DE CONTENU D'IMAGE

(30) Priority: 12.06.2012 GB 201210332
(43) Date of publication of application: 15.04.2015
(73) Proprietor: Supponor Oy, 02150 Espoo (FI)
(72) Inventor: NEVATIE, Niko, FI-00870 Helsinki (FI)
(74) Representative: Appleyard Lees IP LLP
(86) International application number: PCT/EP2013/062184
(87) International publication number: WO 2013/186278

(56) References cited:
- EP-A1- 2 120 212
- EP-A1- 2 120 212
- WO-A1-97/09823
- WO-A1-97/09823

## Description

### FIELD OF THE INVENTION

The present invention relates to a system which modifies the content of an image. More particularly, the present invention relates to a method and apparatus which electronically substitutes content in one or more areas of an image. In some aspects, the present invention relates to an image content detection method and apparatus suitable for use with television broadcast video images.

### BACKGROUND

WO 01/58147 (Rantalainen) describes a method for modifying television video images, wherein a billboard or other visible object is identified with non-visible electromagnetic radiation, such as infra-red light, and selected areas within the video image are replaced with alternate images appropriate to specific viewer groups or geographical regions. For example, billboards at a ground or arena of a major sporting event are observed as part of a television broadcast. Selected areas within the television video images are electronically substituted by alternate images that are more appropriate for a particular country or region. In particular, such an electronic system is useful to create multiple television feeds each having different advertisement content tailored according to an intended audience.

WO1997/009,823 Wilf et al. describes automatic electronic replacement of billboards in a video image with transformation of a replacement image and the claims have been characterised over this document. EP-A-2,120,212 Sako et al describes an example of replacing certain pixels of captured image data with replacement image data.

Considering the related art, there is still a difficulty in providing a reliable and effective mechanism for image content replacement. In particular, there is still a difficulty in providing a system which replaces image content in a way which is pleasing and unobtrusive for the viewer. It is now desired to provide an image content replacement apparatus and method which addresses these, or other, limitations of the current art, as will be appreciated from the discussion and description herein.

### SUMMARY

According to the present invention there is provided an apparatus for image content replacement, as in claim 1. Also, there is provided a method for use in replacing a subject in a video image, as in claim 13, and a computer readable medium as in claim 15. Other features of the invention will be apparent from the dependent claims, and the description herein.

In one aspect there is provided an improved mechanism for replacing content within camera video images. The mechanism may select most-appropriate or best-fit substitute image content for a particular point in time. The substitute content may be selected by considering the current field of view of the camera images and/or a position or orientation of a subject with respect to the field of view. The substitute content may be selected based on telemetry from the camera and/or by analysing the video images themselves. The mechanism may locate, define and replace one or more areas within a moving image which correspond to the subject or subjects.

In one embodiment, the subject is a billboard. In one example, a subject billboard reflects or emits electromagnetic radiation in one or more predetermined wavelength bands. A camera observes the subject to provide camera video images. At least one detector unit also observes the scene to derive a detector signal relating to the radiation from the subject to thereby distinguish the subject from its surroundings. A content replacement apparatus selectively replaces one or more marked areas within the camera video images with alternate image content, such as displaying an alternate advertisement on the billboards, according to a mask signal that is accurately and efficiently identified by the detector signals.

In one aspect there is provided an image content replacement apparatus. A camera image receiving unit receives video images observing a scene including a subject, a mask signal generating unit generates a mask signal that defines marked areas of the video images corresponding to the subject, a content substitution unit substitutes the marked areas with alternate image content according to the mask signal to output modified video images, and an image selector unit selects the alternate image content amongst at least a first alternate image content when the subject is determined to be in a first condition within the scene and a second alternate image content when the subject is determined to be in a second condition within the scene.

In one example, the image selector unit selects the alternate image content at a scene change point of the video images. A scene change point may be a point in time when the video images change significantly. In one example, a scene change point may occur at a point in time when the video images change from one camera to another camera. In one example, the image selector unit may select the alternate image content at a scene change point of the video images according to the camera that is currently used to provide the video images among a set of cameras.

In one example, the image selector unit is arranged to obtain a camera zoom signal defining a relative size of the subject within the video images and to select amongst the first and second alternate images based on the camera zoom signal. The camera zoom signal may define a relative height of the subject within the video images. In one example, the camera zoom signal is based on a camera telemetry signal which defines a focal length of a camera which observes the scene to provide the video images.

In one example, the image selector unit selects the first alternate image content when the subject is detected to be fully visible within the video images and selects the second alternate image content when the subject is detected to be partially obscured within the video images.

In one example, image selector unit selects the first alternate image content when the subject is detected to be fully visible within the video images and selects the second alternate image content when the subject is detected to be incomplete within the video images.

In one example, the image selector unit detects the subject within the video images using the masking signal.

In one example, the image selector unit obtains a camera angle signal defining a relative angle of the camera with respect to the subject within the video images, and selects amongst the first and second alternate images based on the camera angle signal.

In one example, the camera angle signal defines a shooting angle of a camera which observes the scene to provide the video images. The shooting angle may be derived from a camera telemetry signal of the camera. The camera angle signal may be a pan or tilt signal from the camera.

In one example, the image selector unit selects amongst a sequence of replacement images which are triggered by the current value of the camera angle signal.

In one example, the image selector unit selects the first alternate image content when the subject is detected to be substantially planar to an image plane of the video images and selects the second alternate image content when the subject is detected to be at an acute angle with respect to the image plane of the video images.

In one aspect there is provided an image content replacement method. In the method, video images are provided from a camera of a scene including a subject. A mask area is defined corresponding to the subject within the scene, such as by providing a masking signal. A chosen alternate image is selected amongst at least a first alternate image content when the subject is determined to be in a normal condition within the scene and a second alternate image content when the subject is determined to be in an exceptional condition within the scene. The mask area in the video images is substituted with the chosen alternate image content.

The method may include obtaining a camera zoom signal defining a relative size of the subject within the video images, and selecting amongst the first and second alternate images based on the camera zoom signal. The camera zoom signal may be compared against a threshold to select amongst the first and second alternate images. In one example, the camera zoom signal defines a height of the subject within the video images. In another example, the camera zoom signal comprises a camera telemetry signal which defines a focal length of the camera.

The method may include detecting that the subject is partially obscured within the video images. The method may include generating a masking signal which defines the mask area of the video images and detecting that the subject is partially obscured within the video images using the masking signal.

The method may include choosing the first alternate image content when the subject is detected to be fully visible within the video images and choosing the second alternate image content when the subject is detected to be partially obscured by another object within the video images. The method may include defining a prime visible area of the subject using the masking signal, and comparing the prime visible area of the subject with a prime area of each of the first and second replacement images.

The method may include detecting that the subject is incomplete within the video images. The method may include generating a masking signal which defines the mask area of the video images and detecting that the subject is incomplete within the video images as the exceptional condition using the masking signal.

The method may include obtaining a camera angle signal defining a relative angle of the camera with respect to the subject within the video images, and selecting amongst the first and second alternate images based on the camera angle signal. The camera angle signal may define a shooting angle of the camera. The camera angle signal may be derived from a camera telemetry signal. The camera angle signal may be based on a current pan angle and/or current tilt angle of the camera. The method may include providing replacement images in a sequence triggered by the camera angle signal.

In this method, the selecting step may be performed at a scene change point of the video images.

In one aspect there is provided a tangible non-transient computer readable medium having recorded thereon instructions which when executed cause a computer to perform the steps of any of the methods defined herein.

### BRIEF DESCRIPTION OF THE DRAWINGS

Figure 1 is a schematic diagram of an example television broadcasting system;
Figure 2 is a schematic diagram of the example television broadcasting system incorporating a content replacement system;
Figure 3 is a schematic view showing an example content replacement system in more detail;
Figure 4 is a schematic view showing the example content replacement method and apparatus in more detail;
Figure 5 is a schematic view showing the example content replacement method and apparatus in more detail;
Figure 6 is a schematic view showing the example content replacement method and apparatus in more detail;
Figures 7A & 7B are a time sequence of schematic views showing the example content replacement method and apparatus in more detail;
Figure 8 is a schematic view showing the example content replacement method and apparatus in more detail; and
Figure 9 is a flowchart illustrating an example content replacement method.

### DETAILED DESCRIPTION

The example embodiments will be described with reference to a content replacement apparatus and method used to replace content within television video images, particularly to provide photo-realistic replacement of a billboard. However, the apparatus described herein may be applied in many other specific implementations, which may involve other forms of video images or relate to other subjects of interest, as will be apparent to persons skilled in the art from the teachings herein.

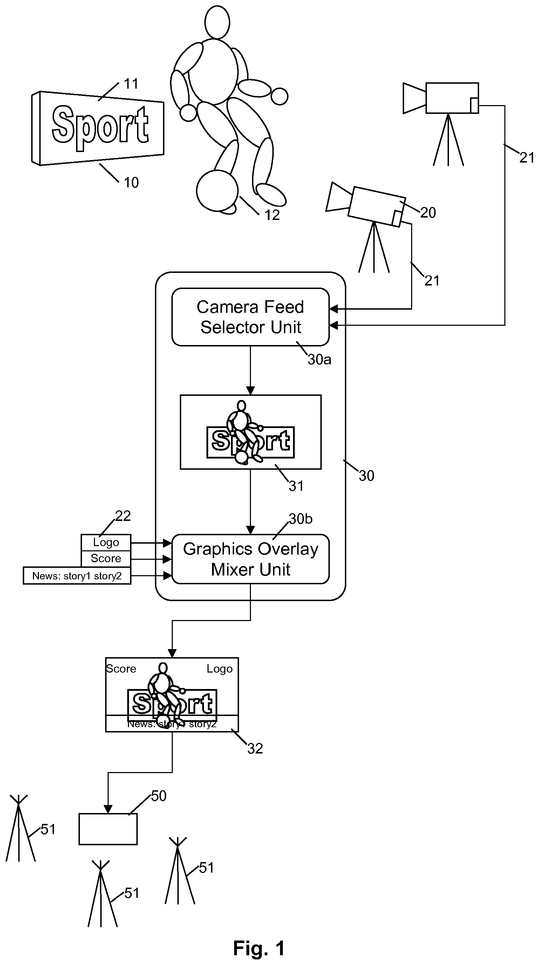

Figure 1 is a schematic overview of an example television broadcasting system in which example embodiments of the present invention may be applied. Figure 1 shows one or more observed subjects 10, one or more cameras 20, a vision mixer 30 and a broadcast delivery system 50. It will be appreciated that the television broadcasting system of Figure 1 has been simplified for ease of explanation and that many other specific configurations will be available to persons skilled in the art.

In the illustrated example embodiment, the observed subject of interest is a billboard 10 which carries original content 11 such as an advertisement (in this case the word "Sport"). The billboard 10 and the original content 11 are provided to be seen by persons in the vicinity. For example, many billboards are provided at a sporting stadium or arena visible to spectators present at the event. In one example, the billboards are provided around a perimeter of a pitch so as to be prominent to spectators in the ground and also in TV coverage of the event.

A television camera 20 observes a scene in a desired field of view to provide a respective camera feed 21. The field of view may change over time in order to track a scene of interest. The camera 20 may have a fixed location or may be movable (e.g. on a trackway) or may be mobile (e.g. a hand-held camera or gyroscopic stabilised camera). The camera 20 may have a fixed lens or zoom lens, and may have local pan and/or tilt motion. Typically, several cameras 20 are provided to cover the event or scene from different viewpoints, producing a corresponding plurality of camera feeds 21.

The billboard 10 may become obscured in the field of view of the camera 20 by an intervening object, such as by a ball, person or player 12. Thus, the camera feed 21 obtained by the camera 20 will encounter different conditions at different times during a particular event, such as (a) the subject billboard moving into or out of the field of view, (b) showing only part of the subject (c) the subject being obscured, wholly or partially, by an obstacle and/or (d) the observed subject being both partially observed and partially obscured. Hence, there is a difficulty in accurately determining the position of the desired subject within the video images of the captured camera feed 21, and so define a masking area where the content within the captured feed is to be electronically replaced with alternate image content. There is a difficulty in providing substitute content smoothly and unobtrusively, e.g. so the viewer can continue watching the game without being unduly distracted by the electronic replacement of billboard advertisements. Further, there is a difficulty in providing substitute content which is in itself interesting and attractive for the viewer.

As shown in Figure 1, the captured camera feeds 21 are provided to a vision mixing system 30, which in this example includes a camera feed selector unit 30a and a graphics overlay mixer unit 30b. Typically, the vision mixer 30 is located in a professional television production environment such as a television studio, a cable broadcast facility, a commercial production facility, a remote truck or outside broadcast van (OB van) or a linear video editing bay.

The vision mixer 30 is operated by a vision engineer to select amongst the camera feeds 21 at each point in time to produce a clean feed 31, also known as a director's cut clean feed.

The vision mixing system 30 may incorporate, or be coupled to, a graphics generator unit which provides a plurality of graphics layers 22, such as a station logo ("Logo"), a current score ("Score") and a pop-up or scrolling information bar ("News: story1 story2"). Typically, the one or more graphics layers 22 are applied over the clean feed 31 to produce a respective dirty feed 32. A separate graphics computer system may produce the graphics layers 22, and/or the graphics layers 22 may be produced by the vision mixer 30. The graphics layers 22 may be semi-transparent and hence may overlap the observed billboard 10 in the video images. The graphics layers 22 may be dynamic, such as a moving logo, updating time or current score information, or a moving information bar. Such dynamic graphics layers give rise to further complexity in defining the desired masking area at each point in time.

The dirty feed 32 is output to be transmitted as a broadcast feed, e.g. using a downstream broadcast delivery 50. The dirty feed 32 may be broadcast live and/or is recorded for transmission later. The broadcast delivery system 50 may distribute and deliver the feed 32 in any suitable form including, for example, terrestrial, cable, satellite or Internet delivery mechanisms to any suitable media playback device including, for example, televisions, computers or hand-held devices. The broadcast feed may be broadcast to multiple viewers simultaneously, or may be transmitted to users individually, e.g. as video on demand.

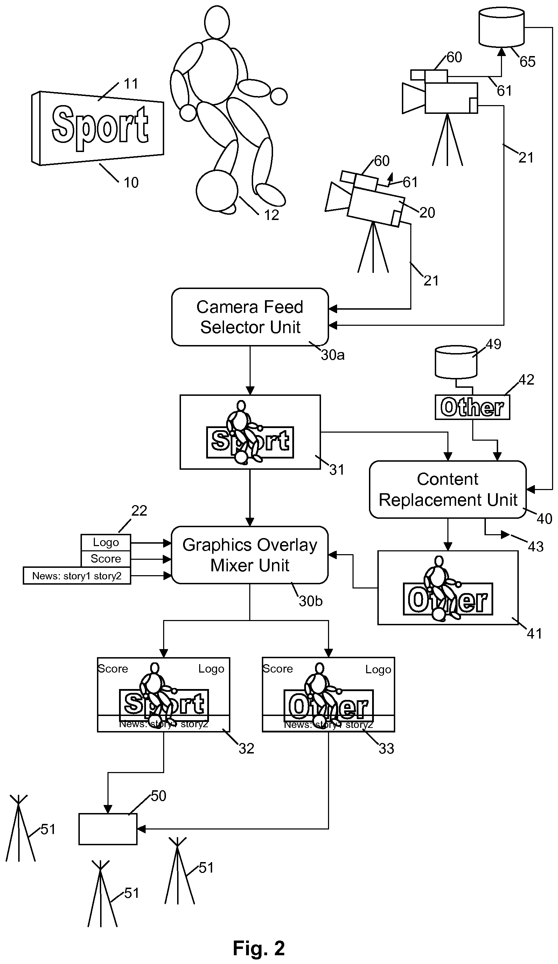

Figure 2 shows the example television broadcasting system in more detail.

A content replacement apparatus 40 is arranged to identify relevant portions of received video images corresponding to the observed subject of interest 10, and to selectively replace the identified portions with alternate content 42. In this case, the content replacement apparatus 40 receives a video image feed 31 and identifies therein the billboard 10 as the subject of interest. These video images are modified so that the billboard 10, which originally displayed the word "Sport", now appears to display the alternate content 42, as illustrated by the word "Other".

In this example, the content replacement apparatus 40 is coupled to receive video images 31 from the vision mixer 30 and to return amended video images 41 to the vision mixer 30. The content replacement apparatus 40 may be combined with the vision mixer 30, or may be provided as a separate and isolated piece of equipment. The content replacement apparatus 40 may be provided in the immediate vicinity of the vision mixer 30, or may be located remotely. The content replacement apparatus 40 may receive video images directly from the vision mixer 30, or via one or more intermediate pieces of equipment. The input video images 31 may be recorded and then processed by the content replacement apparatus 40 later, and/or the output images 41 may be recorded and provided to the vision mixer 30 later.

In the example embodiment, the content replacement apparatus 40 receives the clean feed 31 directly from the vision mixer 30 and produces a modified clean feed 41 as output. The graphics layers 22 are then added to these modified video images 41 through the graphics overlay unit 30b to create a modified dirty feed 33 ready for broadcast. In another example embodiment, the content replacement apparatus 40 receives both the clean feed 31 and the dirty feed 32, substitutes the subject 10 of interest, and then restores the graphics layers 22.

Many other specific configurations will be apparent to those skilled in the art. For example, the content replacement apparatus 40 may be provided prior to the mixer 30 and thus provide the alternate image feed 41 as an input to the mixer 30. In this case the mixer 30 may then apply the graphics layers 22 over the already modified video images 41 to produce the modified dirty feed. However, such as system then tends to be limited in the number of alternate dirty feeds 33 based on the capabilities of the mixer 30. By contrast, placing the content replacement apparatus 40 after the mixer 30 as illustrated in Figure 2 eliminates the 30 mixer as a limiting factor.

In the example embodiment, a high value is achieved when images of a sporting event, such as a football or soccer match, are shown live to a large audience. The audience may be geographically diverse, e.g. worldwide, and hence it is desirable to create multiple different alternate broadcast feeds 33 for supply to the broadcasting system 50 to be delivered in different territories using local delivery broadcast stations 51, e.g. country by country or region by region. In a live event, the content replacement apparatus 40 should operate reliably and efficiently, and should cause minimal delay.

In the example embodiments, the alternate content 42 comprises one or more still images (e.g. JPEG image files) and/or one or more moving images (e.g. MPEG motion picture files). As another example, the alternate content 42 may comprise three-dimensional objects in a 3D interchange format, such as COLLADA, Wavefront OBJ or 3DS. The alternate content 42 is suitably prepared in advance and recorded on a storage medium 49 coupled to the content replacement apparatus 40. Thus, the content replacement apparatus 40 produces one or more output feeds 41 where the observed subject 10, in this case the billboard 10, is replaced instead with the alternate content 42. Ideally, the images within the alternate feed 41 should appear photo-realistic, in that the ordinary viewer normally would not notice that the content carried by the billboard 10 has been electronically substituted. Hence, it is important to accurately determine a masking area defining the position of the billboard 10 within the received video images input to the content replacement apparatus 40. Also, it is important to identify accurately when portions of the observed subject 10 have been obscured by an intervening object 12 such as a player, referee, etc. Notably, the intervening object or objects may be fast-moving and may appear at different distances between the camera 20 and the subject 10. Further, it is desirable to produce the alternate feed 41 containing the alternate content 42 in a way which is more agreeable and/or less obtrusive for the viewer.

As shown in Figure 2, the example content replacement apparatus 40 is arranged to process one or more detector signals 61. In one example embodiment, the detector signals 61 may be derived from the video images captured by the camera 20, e.g. using visible or near-visible light radiation capable of being captured optically through the camera 20, wherein the camera 20 acts as a detector 60. In another example embodiment, one or more detector units 60 are provided separate to the camera 20.

The detector signals 61 may be derived from any suitable wavelength radiation. The wavelengths may be visible or non-visible. In the following example embodiment, the detector signals 61 are derived from infra-red wavelengths, and the detector signals 61 are infra red video signals. Another example embodiment may detect ultra-violet radiation. In one example embodiment, polarised visible or non-visible radiation is detected. A combination of different wavelength groups may be used, such as a first detector signal derived from any one of infra-red, visible or ultra-violet wavelengths and a second detector signal derived from any one of infra-red, visible or ultra-violet wavelengths.

In the illustrated example embodiment, one or more detectors 60 are associated with the camera 20. In the example embodiment, each camera 20 is co-located with at least one detector 60. The detector 60 may survey a field of view which is consistent with the field of view of the camera 20 and so include the observed subject of interest 10. The detector field of view and the camera field of view may be correlated. Thus, the detector signals 61 are correlated with the respective camera feed 21. In the example embodiment, the detector signals 61 are fed to the content replacement apparatus 40. In the example embodiment, the detector signals 61 are relayed live to the content replacement apparatus 40. In another example embodiment, the detector signals 61 may be recorded into a detector signal storage medium 65 to be replayed at the content replacement apparatus 40 at a later time.

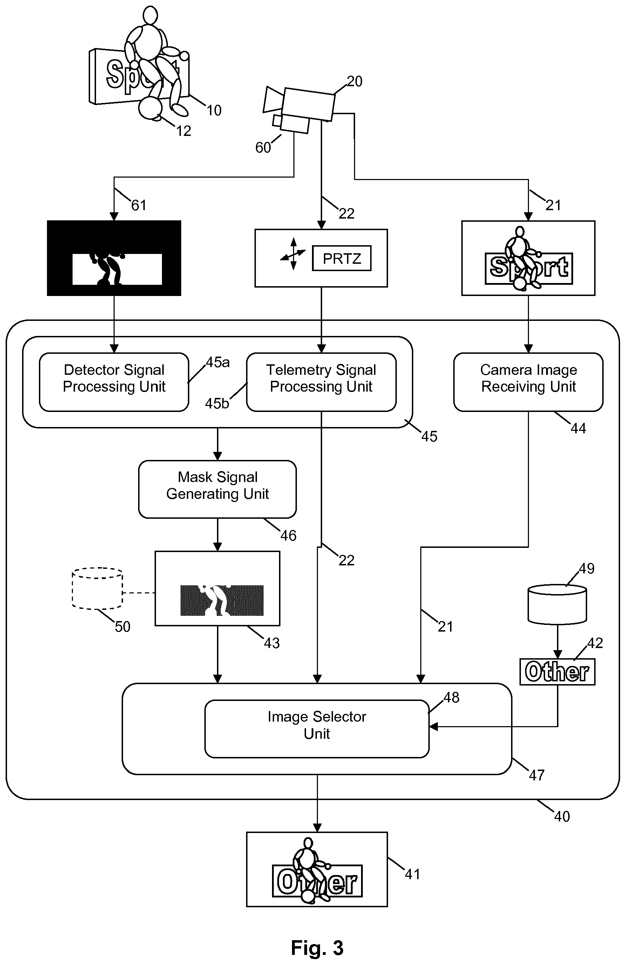

Figure 3 is a schematic view showing an example content replacement system in more detail. In this example, the system uses infra-red detectors to determine a position of the subject billboard within the video images.

In this example, the subject billboard 10 comprises a substrate which carries a printed medium, such as a printed sheet, to display a desired printed message or advertisement. The billboard 10 may be passive, being illuminated by ambient radiation (e.g. from natural sunlight or stadium lights) and reflecting the ambient radiation toward the camera 20 and detector 60. Alternately, the billboard 10 may be active by including a plurality of light units, such as light emitting diode (LED) packages. A lens unit and/or a diffuser (not shown) may be provided to distribute light from the LED units evenly across an illuminated area of the billboard. These light units may form a light box to illuminate the printed sheet from behind with infra-red light.

In the example embodiment, at least one infra-red detector 60 is associated with each of the cameras 20, producing one or more streams of the detector signals 61. As an example, the one or more detectors 60 may be narrow-spectrum near infra-red (NIR) cameras. The detector 60 may be mounted adjacent to the camera 20 so as to have a field of view consistent with the camera 20 and/or may share optical components with the camera 20.

The detector 60 may be arranged to move with the camera 20, e.g. to follow the same pan & tilt motions. In the example embodiments, each of the cameras 20 may provide a telemetry signal 22 which records relevant parameters of the camera, such as the focal length, aperture, motion and position. In one example, the telemetry signal 22 includes pan and tilt information. The telemetry 22 may also include zoom information or zoom information may be derived from analysing the moving images themselves. The telemetry 22 may be used, directly or indirectly, to calculate or otherwise provide pan, roll, tilt and zoom (PRTZ) information. The camera telemetry signal 22 may be passed to the content replacement apparatus 40, directly or via an intermediate storage or recording, in order to provide additional information about the field of view being observed by the camera 20.

In the example embodiment, the content replacement apparatus 40 comprises a camera image receiving unit 44, a signal processing unit 45, a mask signal generating unit 46, and a content substitution unit 47.

The camera image receiving unit 44 receives video images 21, which in this case are the video images taken by the cameras 20 to provide respective camera feeds. As described above, the camera feeds 21 may be multiplexed together to provide a clean feed 31 comprising moving images from different cameras 20 at different points in time. The clean feed 31 may be modified with additional graphics layers to produce a dirty feed 32. The camera images 21, the clean feed 31 and/or the dirty feed 32 may be provided to the content replacement apparatus 40, depending upon the nature of the installation.

The signal processing unit 45 receives signals which allow the subject billboards 10 to be identified within the video images 21. As will be discussed in more detail below, the signal processing unit 45 may process the infra-red detector signals 61 and/or the camera telemetry signals 22.

In the example embodiment the signal processing unit 45 comprises a detector signal processing unit 45a and a telemetry signal processing unit 45b.

The detector signal processing unit 45a processes the stream of detector signals 61 produced by the one or more detectors 60. In the example embodiments, the scene observed by the detector signal 61 is consistent with the scene in the video images 21 from the cameras 20. The detector signal processing unit 45a may spatially and/or temporally correlate the detector signals 61 with the video images 21. The detector signals 61 are preferably digital, or are digitised by analogue-digital conversion, thereby representing the field of view as an array of digital pixel values each representing an intensity of the detected radiation. As noted above, in the example embodiments the detector signals are based on infra-red wavelengths and thus represent an intensity of the selected infra-red wavelengths at each pixel value.

Meanwhile, the telemetry signal processing unit 45b receives the telemetry signals 22 produced by the cameras 20. In particular, the telemetry signals 22 provide dynamic information concerning the field of view observed by the video images 21 and, consequently, the current field of view of the detector signals 61.

The telemetry signal processing unit 45b may use the received telemetry signals 22 to establish a location of the subject 10 relative to the observed field of view in the video images 21. In the example embodiments, the telemetry signal processing unit 45b is provided in advance with 3D coordinates defining a location of the or each subject billboard 10 and the or each camera 20 within a 3D spatial environment, which allows the relative locations of these components to be established within a defined consistent three dimensional space. The system may be calibrated in advance such that an optical centre of the lens of the camera 20 is known. In one example, a pin hole camera mathematical model is applied in order to calculate a projection or mapping of the subject billboard 10 from the real world onto the image plane in the field of view of the camera 20 at a default starting position.

In the example embodiments, the telemetry signal processing unit 45b then actively estimates a position of the subject 10 within the field of view of the camera 20 as the camera is moved, according to the telemetry signals 22. These calculations allow the system to estimate an approximate position of the subject 10 within the video images 21.

The mask signal generating unit 46 generates a mask signal 43 to be applied to video images 21. In particular, the mask signal 43 is generated based on the detector signals 61, and may be enhanced by also considering the telemetry signals 22.

The masking area signal 43 is itself a useful product of the system and can be output or recorded in a storage unit 50 to be used later (see Figure 3). In one example embodiment, the content replacement apparatus 40 may be used only to produce the masking area signal 43, and the content substitution operation may be performed downstream by another piece of equipment. For example, looking again at Figure 2, the masking signal 43 may be transmitted to the broadcasting system 50 to be carried alongside the broadcast feed to a downstream content substitution unit (not shown) to insert the alternate content 42 locally prior to transmission by a local transmitter unit 51.

In the example embodiments, the content substitution unit 47 electronically substitutes one or more of the masked areas within the video images 21 with the alternate image content 42 according to the masking signal 43. Thus, the content substitution unit 47 in use produces the respective alternate video image feed 41.

In one aspect, the content substitution unit 47 comprises an image selector unit 48 which determines that a predetermined special case or exceptional condition has arisen which needs special handling within the content substitution unit 47. The image selector unit 48 may generate an image selection signal which distinguishes at least between first and second conditions, such as between a normal situation on the one hand and an exceptional situation or special case situation on the other. In response, the content substitution unit 47 selects and applies appropriate replacement content 42, e.g. selects amongst normal and exceptional substitute images, according to this special case selection signal. The content substitution unit 47 substitutes the identified area within the video images 21 according to the mask signal 43 using the identified replacement image content 42 as selected by the image selector unit 48.

As will be discussed below, the image selector unit 48 advantageously uses the camera telemetry to provide various enhancements within the content replacement apparatus 40. However, other embodiments are also envisaged which do not rely on the camera telemetry 22 and instead derive relevant signals or information directly from the camera images 21.

### Zoom/Focal Length

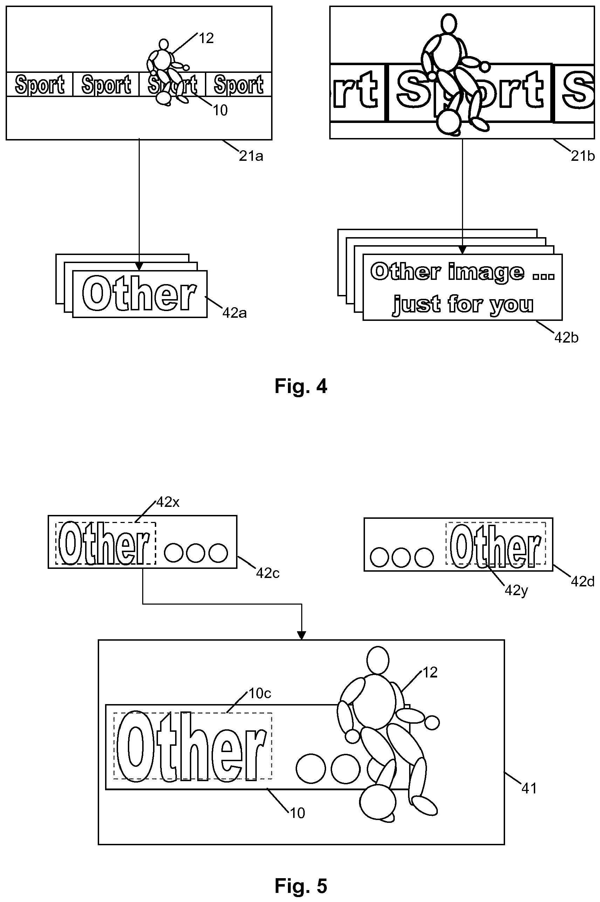

Figure 4 shows a first example embodiment of a special case or exceptional situation as may be identified within the image selector unit 48. This example mechanism allows the apparatus 40 to identify predetermined exceptional conditions and, in response, select and apply a replacement content 42 which is most appropriate to those exceptional conditions.

In this example, video images 21a and 21b show the same scene at two different camera focal lengths, and thus different amounts of zoom. The image selector unit 48 is arranged to select from amongst available replacement content images 42a, 42b accordingly, so that a best-fit substitute is provided for each respective image or image sequence.

This mechanism is particularly useful in relation to cameras with a powerful zoom facility. The focal length of the camera 20 is a primary factor in determining whether the subject 10 will be visible distantly, as a normal case, or whether the subject 10 will instead be viewed in close up at this time. A camera 20 which observes a stadium or event with a wide field of view will tend to observe several billboards 10 distantly in their entirety, whereas the same camera when with a high zoom value (long focal length) has a restricted field of view and will tend to capture only one of the subject billboard 10 in full. In this example, the system is capable of displaying selectively, for the same subject billboard 10, either the first alternate image 42a or the second 42b. In this case, the first image 42a is more appropriate to being viewed from a distance and contains the text "Other" or some suitable simplified message. The second alternate image 42b is more appropriate to be viewed in close-up and thus may contain more detailed text or images, such as, in this example, "Other image ... just for you".

In a first example embodiment, the focal length Z of the camera 20, as derived from the telemetry signals 22, is compared against a threshold value T_{z} which distinguishes between a normal wide field of view and an exceptional narrow field of view. The threshold T_{z} may be set in advance according to the conditions of the location of the scene, such as by testing the cameras 20 prior to a live event. The telemetry thus provides a camera zoom signal. The current focal length Z is compared against the predetermined threshold by the image selector unit 48. In response, the image selector unit 48 selects the replacement image 42 within a normal set 42a or an exceptional set 42b. In other words, comparing the telemetry against a predetermined threshold determines a selection between at least first and second substitute images 42a, 42b. In the example mechanism, this selection allows a best fit of the relevant alternate image against the subject 10 which is currently in view.

In a second example embodiment, the image selector unit 48 uses the masking signal 43 to identify the special case or exceptional condition. In this case, the camera zoom signal is derived from the camera images 21. As an example, the subject billboard 10 is determined to appear at a region of the current image 21 according to the masking signal 43, and thus it is determined that the subject 10 will be visible in this frame or sequence of frames as a proportion of the visible area of the image. In the example embodiments, the subject billboards 10 have constant physical dimensions. Thus, a current height H of the subject billboards may be determined with reference to a vertical orientation of the image. The height H may be used in this situation as a useful indicator as well as or in place of the current camera focal length Z. The determined current height H may be expressed, for example, as a number of pixels or as a percentage of the full image height. The height H may be compared against a respective threshold value T_{H}. As an example, an exceptional condition is considered to apply when the subject billboard is say 10% or say 20% or more of the total height of the screen. A replacement image content 42a or 42b is selected accordingly, ready to be applied to the subject 10 in view.

In one aspect, more than one threshold value may be applied. However a single threshold is preferred in the example embodiments for simplicity. The threshold is convenient to determine whether the current tested value, e.g. zoom Z or subject height H, is within a first or a second range and to select first or second alternate images 42a or 42b accordingly.

In one aspect, the image selector unit 48 determines whether or not a special case applies at a scene change point, namely at a point in time when the video images 21 changes significantly. As will be familiar in the context of video editing, a scene change point occurs at a point in time such as when the current image feed changes from one camera to another camera. Making the determination at the scene change point minimises disruption for the viewer and is least noticeable. Hence, using the scene change point as a trigger for the determination improves a photorealistic effect. The determined replacement content 42a or 42b is then maintained until the next scene change point. That is, even if the camera now changes focal length and moves from a high zoom or narrow point of field of view (high Z or H value) and returns towards a wide field of view or normal condition (low Z or H value) all within a single scene, then the selected replacement image 42b is maintained until the next scene change point, at which point in time the determination is made again. This mechanism also inhibits unwanted oscillations between images, such as where the tested Z or H value is close to the threshold T.

As one example embodiment, the alternate image content 42 may comprise moving images which loop or repeat after a defined period of time (e.g. 3 or 5 seconds). Suitably, the determination is made at a scene change point of the replacement media. Using certain kinds of video adverts, the scene change can be allowed to occur after the advert file has looped, i.e. when the video has reached its end and before that particular video sequence starts playing from the beginning again.

In another example embodiment, the image selector unit 48 may select the alternate image content at a scene change point of the video images according to the camera that is currently used to provide the video images, amongst a plurality of cameras. This embodiment considers the situation where a first camera is provided to take close-up images with a long focal length, while a second camera has a wide field of view. In this case the alternate image content 42a, 42b may be selected based on a camera signal C which identifies the camera currently in use.

### Partially Obscured Subjects

Figure 5 shows a further enhancement of the content replacement apparatus. In this example, the image selector unit 48 identifies that the subject 10 is partially obscured. The image selector unit 48 may use the masking signal 43 to identify the partially obscured subject 10. As noted above, the masking signal 43 reveals areas 10c of the subject which are visible and, accordingly, areas which are obscured by an intervening object such as a player 12. The image selector unit 48 suitably selects amongst a predetermined set of at least first and second replacement images 42c, 42d which best fits the visible area 10c of the subject 10. This may be achieved by considering the visible areas 10c as a prime area. The visible prime area 10c of the subject 10 is then compared against the available set of replacement images each of which has corresponding prime areas 42x, 42y and a best fit image is selected which is most appropriate. In this case, the sponsor's message "Other" is the defined prime area 42x, 42y and hence is matched with the visible prime area 10c of the billboard 10.

In this example, if the obscuring object 12 now moves, then typically it will be more appropriate and least noticeable to maintain the same selected replacement content until a next scene change point. However, at other times it will be appropriate to re-evaluate the subject 10 according to the changing position of the obstacle 12 and select a new best fit replacement image even within a single scene.

### Incomplete Subjects

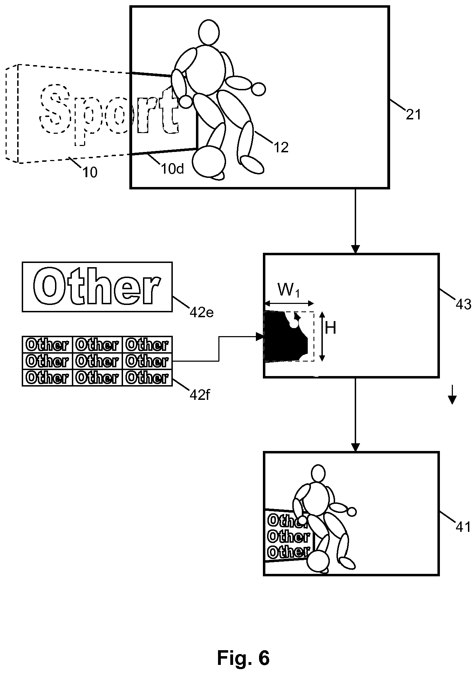

Figure 6 illustrates a further example embodiment in which only a part 10d of the subject billboard 10 is currently visible within a frame of the video images 21. Identifying that the billboard 10 is incomplete allows the system to select replacement content 42 which is a best fit with the visible part 10d of the subject 10. In this example, a first replacement image 42e is appropriate to fill a complete area of the billboard and is most appropriate when the billboard 10 is completely within the image frame. Meanwhile, the second replacement image 42f is more appropriate when the billboard 10 is determined to be incomplete. Given that the billboard 10 has constant physical dimensions, the currently observed height H allows an expected width W to be predicted. The partially incomplete billboard may be determined by dividing an observed width W₁ against the expected width W to give a width percentage W% which is compared against a width threshold T_{w}. As shown in Figure 6, advantageously the second image 42f contains elements which are tiled or repeated so that a sponsor message, such as "Other", will be completely visible even when applied to only the visible part 10d of the incomplete subject 10.

### Action Following

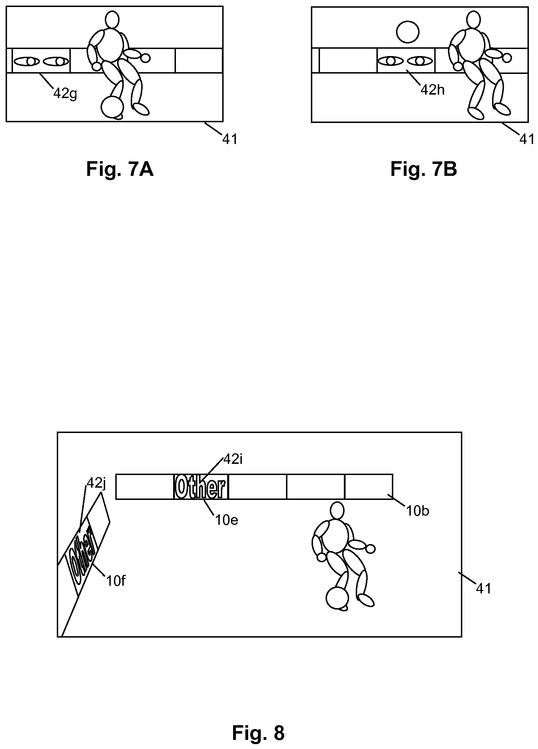

Figures 7A & 7B show another example embodiment, here illustrated by two frames of the revised image stream 41 spaced apart by a short time interval. The replacement content 42 is updated and reselected for subsequent video image frames within a sequence, e.g. from the same camera 20. In this case, the images are updated relatively frequently and prior to a scene change point. In this embodiment, a plurality of similar replacement content images 42 are provided as a set comprising a sequence of images of which the example images 42g and 42h are shown here. The replacement images from the sequence are selected based on a relative position of the subject 10 with respect to the image frame 21.

In one example embodiment, a shooting angle or shooting direction of the camera 20 is determined by the telemetry 22. The current pan angle P or tilt angle T may be used to infer the current relative location of the billboard 10 within the image 21.

As shown in Figure 7, the sequence of replacement images 42g, 42h may be triggered so that the replacement images are applied in sequence. In particular, the sequence of replacement images may be applied to follow the shooting direction of the camera. Given that the camera will tend to keep an object of greatest interest at or about a centre of the frame, this embodiment can be used to give the impression that the replacement images on the billboard 10 is actively "watching" the game and following the ball, as illustrated here by eyes which change their direction of view depending on the relative angle between the billboard and the camera. As an example, the full sequence suitably includes of the order of 5 to 15 subsequent images for a good impression of smooth motion.

Further, as another example, the alternate content 42 may comprise three-dimensional objects in a 3D interchange format, such as COLLADA, Wavefront OBJ or 3DS. These 3D-adverts allow the internal scale and orientation of the replacment media to be manipulated, based on the telemetry input data. As an example, a 3D text logo advert can be made to smoothly follow or "watch" the center of the visible screen.

This embodiment provides functionality which is not only pleasing for the viewer but further enhances an experience of the viewer in the alternate electronically modified broadcast feed.

### Acute Angled Subjects

Figure 8 shows a further example embodiment. In this case a particular problem arises where the subject 10f is at an acute angle to the image plane of the video images taken by the camera 20. In a normal situation, the subject billboards 10e are substantially parallel to the image plane and thus appear as regular rectangular shapes which are relatively easy to identify and process. By contrast, subject billboards 10f at an acute angle to the image plane appear as trapezoids or rhomboids. In this exceptional situation, a best fit image 42i or 42j is selected which is more appropriate to the geometric shape of the subject 10e or 10f as presented within the image plane. An image 42j with simplified content or images which are graphically appropriate to the observed condition of the acute angled subject 10f may be selected and applied. As another example, text within the second image 42j may have substantially increased kerning so as to remain readable even when manipulated to be displayed on the acute angled subject 10f in a photo-realistic manner.

In the example embodiments, the exceptional condition for awkwardly angled subjects is identified by the telemetry 22 which reveals a current shooting direction of the camera 20. Given the known relative physical locations of the subject 10 and camera 20, appropriate threshold pan or tilt values can be predicted by 3D geometric modelling as discussed above. The exceptional case can thus be detected in use with this knowledge of the geometry of the scene including camera locations in relation to the subject billboards 10. Further, testing the cameras 20 in advance of a live event allows the threshold pan P and/or tilt T values to be determined at which the awkwardly angled subjects 10f will appear. The replacement images may then be selected accordingly for those subjects. Thus, the system identifies whether the respective subject 10 within the received image frame 21 will appear normally or will appear in the exceptional geometric condition.

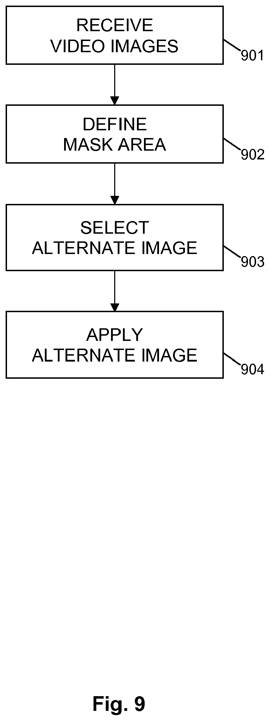

Figure 9 is a flowchart highlighting the image content replacement method discussed herein.

In the method, video images are provided from a camera 20 of a scene including a subject 10 at step 901. At step 902, a mask area is defined corresponding to the subject within the scene, such as by providing a masking signal 43. At step 903, a chosen alternate image 42 is selected amongst at least a first alternate image content 42a when the subject 10 is determined to be in a first or normal condition within the scene and a second alternate image content 42b when the subject is determined to be in a second or exceptional condition within the scene. At step 904, the mask area in the video images 21 is substituted with the chosen alternate image content 42.

The method may be augmented by any of the further steps as discussed herein. For example, the method at step 903 may include obtaining a camera zoom signal defining a relative size of the subject within the video images, and selecting amongst the first and second alternate images based on the camera zoom signal.

At step 903, the method may include obtaining a camera angle signal defining a relative angle of the camera with respect to the subject within the video images, and selecting amongst the first and second alternate images 42a, 42b, etc, based on the camera angle signal. The camera angle signal may define a shooting angle of the camera. The camera angle signal may be derived from a camera telemetry signal 22. The camera angle signal may be based on a current pan angle and/or a current tilt angle of the camera 20. The method may include providing replacement images in a sequence triggered by the camera angle signal.

The industrial application of the example embodiments will be clear from the discussion herein.

At least some embodiments of the invention may be constructed, partially or wholly, using dedicated special-purpose hardware. Terms such as 'component', 'module' or 'unit' used herein may include, but are not limited to, a hardware device, such as a Field Programmable Gate Array (FPGA) or Application Specific Integrated Circuit (ASIC), which performs certain tasks. Alternatively, elements of the invention may be configured to reside on an addressable storage medium and be configured to execute on one or more processors. Thus, functional elements of the invention may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Further, although the example embodiments have been described with reference to the components, modules and units discussed herein, such functional elements may be combined into fewer elements or separated into additional elements.

Although a few example embodiments have been shown and described, it will be appreciated by those skilled in the art that various changes and modifications might be made without departing from the scope of the invention, as defined in the appended claims.

## Claims

1. An apparatus (40) for image content replacement, comprising:
a camera image receiving unit (44) which is arranged to receive video images (21) observing a scene including a subject (10) such as a billboard;
a mask signal generating unit (46) which is arranged to generate a mask signal (43) that defines mask areas of the video images (21) corresponding to the subject (10) to be replaced with an alternate image content (42), such as for replacing an original advertisement on a billboard with a replacement advertisement;
**characterised in that** the apparatus further comprises:
an image selector unit (48) which is adapted to:
store at least a first alternate image (42a) and a second alternate image (42b), the first and second alternate images (42a, 42b) being different from each other and being appropriate to different conditions within the scene,
determine whether a tested value (H, Z, W) derived from a camera telemetry signal (22) or from the video images (21) themselves, is in a first range or a second range, wherein the first range and the second range are divided by a threshold value (T_{H}, T_{Z}, T_{W}), and
select the first alternate image (42a) as the alternate image content (42) when the tested value (H, Z, W) is in the first range according to the threshold value (T_{H}, T_{Z}, T_{W}) and select the second alternate image (42b) as the alternate image content (42) when the tested value (H, Z, W) is in the second range according to the threshold value (T_{H}, T_{Z}, T_{W}).

2. The apparatus of claim 1, wherein the image selector unit (48) is arranged to obtain the tested value (H, Z) from a signal defining a relative size of the subject (10) within the video images (21) and to select amongst the first and second alternate images (42a, 42b) based on the tested value (H, Z) by comparing the signal against the threshold value (T_{H},T_{Z}).

3. The apparatus of claim 2, wherein the signal is derived from the mask signal (43) to define a relative height (H) of the subject (10) within the video images (21) and is compared against a height threshold (T_{H}).

4. The apparatus of claim 2, wherein the signal is based on a camera telemetry signal (22) representing a focal length (Z) of a camera (20) which observes the scene to provide the video images (21) and is compared against a focal length threshold (T_{Z}).

5. The apparatus of any preceding claim, wherein the image selector unit (48) is adapted to select the alternate image content (42) at a scene change point of the video images (21).

6. The apparatus of any preceding claim, wherein the image selector unit (48) is adapted to select the first alternate image (42c) when the subject (10) is detected to be fully visible within the video images (21) and select the second alternate image (42d) when the subject (10) is detected to be partially obscured within the video images (21).

7. The apparatus of any preceding claim, wherein image selector unit (48) is adapted to select the first alternate image (42e) when the subject (10) is detected to be fully visible within the video images (21) and select the second alternate image (42f) when the subject (10) is detected to be incomplete within a frame area of the video images (21).

8. The apparatus of claim 7, wherein the image selector unit (48) is adapted to derive a width value (W) of the subject (10) within the video images (21) using the masking signal (43) to be compared against a width threshold (T_{W}).

9. The apparatus of any preceding claim, wherein the image selector unit (48) is adapted to obtain a camera angle signal (P, T) defining a relative angle of a camera (20) with respect to the subject (10), and to select amongst the first and second alternate images (42g, 42h) based on the camera angle signal (P, T).

10. The apparatus of claim 9, wherein the camera angle signal (P, T) defines a shooting angle of the camera (20) which observes the subject (10) in the scene to provide the video images (21) and is derived from a camera telemetry signal (22) of the camera (20).

11. The apparatus of claim 9 or 10, wherein the image selector unit (48) is adapted to select amongst at least the first and second alternate images (42g, 42h) in a sequence of replacement images according to the camera angle signal (P, T).

12. The apparatus of claim 9 or 10, wherein the image selector unit (48) is adapted to select the first alternate image (42i) when the subject (10) is detected to be substantially planar to an image plane of the video images (21) and select the second alternate image (42j) when the subject (10) is detected to be at an acute angle with respect to the image plane of the video images (21).

13. A method for use in replacing a subject in a video image, the method comprising:
a) providing video images (21) of a scene including a subject (10) such as a billboard with an original advertisement;
b) defining a mask area of the video images (21) corresponding to the subject (10), the mask area defining an area of the video images (21) which is to be replaced with alternate image content (42) such as a replacement advertisement;
**characterised by:**
c) storing at least a first alternate image (42a) and a second alternate image (42b), the first and second alternate images (42a, 42b) being different from each other and being appropriate to different conditions within the scene,
d) determining whether a tested value (H, Z, W), derived from a camera telemetry signal (22) or from the video images (21), is in a first range or a second range according to a threshold value (T_{H}, T_{Z}, T_{W}), and
e) selecting the first alternate image (42a) as the alternate image content (42) when the tested value (H, Z, W) is in the first range according to the threshold value (T_{H}, T_{Z}, T_{W}) and selecting the second alternate image (42b) as the alternate image content (42) when the tested value (H, Z, W) is in the second range according to the threshold value (T_{H}, T_{Z}, T_{W}).

14. The method of claim 13, further comprising
f) substituting the mask area in the video images (21) with the chosen alternate image content (42a,42b) to provide modified video images (41).

15. A computer readable storage medium having recorded thereon instructions which when executed by a computer perform the method of claim 13 or 14.

## Patentansprüche

1. Einrichtung (40) zur Bildinhaltsersetzung, die Folgendes umfasst:
eine Kamerabildempfangseinheit (44), die zum Empfangen von Videobildern (21) eingerichtet ist, die eine Szene einschließlich eines Motivs (10), wie etwa einer Werbetafel, beobachten;
eine Maskensignalerzeugungseinheit (46), die zum Erzeugen eines Maskensignals (43) eingerichtet ist, das Maskenbereiche der Videobilder (21) dem Motiv (10) entsprechend definiert, die mit einem alternativen Bildinhalt (42) zu ersetzen sind, wie etwa zum Ersetzen einer ursprünglichen Werbung auf einer Werbetafel mit einer Ersatzwerbung;
**dadurch gekennzeichnet, dass** die Einrichtung ferner Folgendes umfasst:
eine Bildselektoreinheit (48), die zu Folgendem eingerichtet ist:
Speichern wenigstens eines ersten alternativen Bildes (42a) und eines zweiten alternativen Bildes (42b), wobei das erste und zweite alternative Bild (42a, 42b) voneinander verschieden sind und für unterschiedliche Bedingungen innerhalb der Szene angemessen sind,
Bestimmen, ob ein getesteter Wert (H, Z, W), der aus einem Kameratelemetriesignal (22) oder aus den Videobildern (21) selbst abgeleitet wird, in einem ersten Bereich oder einem zweiten Bereich liegt, wobei der erste Bereich und der zweite Bereich durch einen Schwellenwert (T_{H}, T_{Z}, T_{W}) unterteilt sind, und
Auswählen des ersten alternativen Bildes (42a) als den alternativen Bildinhalt (42), wenn der getestete Wert (H, Z, W) in dem ersten Bereich gemäß dem Schwellenwert (T_{H}, T_{Z}, T_{W}) liegt, und Auswählen des zweiten alternativen Bildes (42b) als den alternativen Bildinhalt (42), wenn der getestete Wert (H, Z, W) in dem zweiten Bereich gemäß dem Schwellenwert (T_{H}, T_{Z}, T_{W}) liegt.

2. Einrichtung nach Anspruch 1, wobei die Bildselektoreinheit (48) zum Erhalten des getesteten Werts (H, Z) aus einem Signal, das eine relative Größe des Motivs (10) innerhalb der Videobilder (21) definiert, und Auswählen zwischen dem ersten und zweiten alternativen Bild (42a, 42b) basierend auf dem getesteten Wert (H, Z) durch Vergleichen des Signals gegenüber dem Schwellenwert (T_{H}, T_{Z}) eingerichtet ist.

3. Einrichtung nach Anspruch 2, wobei das Signal aus dem Maskensignal (43) abgeleitet wird, um eine relative Höhe (H) des Motivs (10) innerhalb der Videobilder (21) zu definieren, und gegenüber einer Höhenschwelle (T_{H}) verglichen wird.

4. Einrichtung nach Anspruch 2, wobei das Signal auf einem Kameratelemetriesignal (22) basiert, das eine Brennweite (Z) der Kamera (20) repräsentiert, die die Szene beobachtet, um die Videobilder (21) bereitzustellen, und gegenüber einer Brennweitenschwelle (T_{Z}) verglichen wird.

5. Einrichtung nach einem vorhergehenden Anspruch, wobei die Bildselektoreinheit (48) zum Auswählen des alternativen Bildinhalts (42) bei einem Szenenänderungspunkt der Videobilder (21) eingerichtet ist.

6. Einrichtung nach einem vorhergehenden Anspruch, wobei die Bildselektoreinheit (48) zum Auswählen des ersten alternativen Bildes (42c), wenn detektiert wird, dass das Motiv (10) innerhalb der Videobilder (21) vollständig sichtbar ist, und Auswählen des zweiten alternativen Bildes (42d), wenn detektiert wird, dass das Motiv (10) teilweise innerhalb der Videobilder (21) unkenntlich ist, eingerichtet ist.

7. Einrichtung nach einem vorhergehenden Anspruch, wobei die Bildselektoreinheit (48) zum Auswählen des ersten alternativen Bildes (42e), wenn detektiert wird, dass das Motiv (10) vollständig innerhalb der Videobilder (21) sichtbar ist, und Auswählen des zweiten alternativen Bildes (42f), wenn detektiert wird, dass das Motiv (10) innerhalb eines Einzelbildbereichs der Videobilder (21) unvollständig ist, eingerichtet ist.

8. Einrichtung nach Anspruch 7, wobei die Bildselektoreinheit (48) zum Ableiten eines Breitenwertes (W) des Motivs (10) innerhalb der Videobilder (21) unter Verwendung des Maskierungssignals (43) eingerichtet ist, welcher gegenüber einer Breitenschwelle (T_{W}) verglichen werden soll.

9. Einrichtung nach einem vorhergehenden Anspruch, wobei die Bildselektoreinheit (48) zum Erhalten eines Kamerawinkelsignals (P, T), das einen relativen Winkel einer Kamera (20) mit Bezug auf das Motiv (10) definiert, und zum Auswählen zwischen dem ersten und zweiten alternativen Bild (42g, 42h) basierend auf dem Kamerawinkelsignal (P, T) eingerichtet ist.

10. Einrichtung nach Anspruch 9, wobei das Kamerawinkelsignal (P, T) einen Aufnahmewinkel der Kamera (20) definiert, die das Motiv (10) in der Szene beobachtet, um die Videobilder (21) bereitzustellen, und aus einem Kameratelemetriesignal (22) der Kamera (20) abgeleitet wird.

11. Einrichtung nach Anspruch 9 oder 10, wobei die Bildselektoreinheit (48) zum Auswählen zwischen wenigstens dem ersten und zweiten alternativen Bild (42g, 42h) in einer Sequenz von Ersatzbildern gemäß dem Kamerawinkelsignal (P, T) eingerichtet ist.

12. Einrichtung nach Anspruch 9 oder 10, wobei die Bildselektoreinheit (48) zum Auswählen des ersten alternativen Bildes (42i), wenn detektiert wird, dass das Motiv (10) im Wesentlichen planar zu einer Bildebene der Videobilder (21) ist, und zum Auswählen des zweiten alternativen Bildes (42j), wenn detektiert wird, dass sich das Motiv (10) in einem spitzen Winkel mit Bezug zu der Bildebene der Videobilder (21) befindet, eingerichtet ist.

13. Verfahren zur Verwendung beim Ersetzen eines Motivs in einem Videobild, wobei das Verfahren Folgendes umfasst:
a) Bereitstellen von Videobildern (21) einer Szene einschließlich eines Motivs (10), wie etwa einer Werbetafel mit einer ursprünglichen Werbung;
b) Definieren eines Maskenbereichs der Videobilder (21) dem Motiv (10) entsprechend, wobei der Maskenbereich einen Bereich der Videobilder (21) definiert, der mit einem alternativen Bildinhalt (42) zu ersetzen ist, wie etwa mit einer Ersatzwerbung;
**gekennzeichnet durch**:
c) Speichern wenigstens eines ersten alternativen Bildes (42a) und eines zweiten alternativen Bildes (42b), wobei das erste und zweite alternative Bild (42a, 42b) voneinander verschieden sind und für unterschiedliche Bedingungen innerhalb der Szene angemessen sind,
d) Bestimmen, ob ein getesteter Wert (H, Z, W), der aus einem Kameratelemetriesignal (22) oder aus den Videobildern (21) abgeleitet wird, gemäß einem Schwellenwert (T_{H}, T_{Z}, T_{W}) in einem ersten Bereich oder einem zweiten Bereich liegt, und
e) Auswählen des ersten alternativen Bildes (42a) als den alternativen Bildinhalt (42), wenn der getestete Wert (H, Z, W) in dem ersten Bereich gemäß dem Schwellenwert (T_{H}, T_{Z}, T_{W}) liegt, und Auswählen des zweiten alternativen Bildes (42b) als den alternativen Bildinhalt (42), wenn der getestete Wert (H, Z, W) in dem zweiten Bereich gemäß dem Schwellenwert (T_{H}, T_{Z}, T_{W}) liegt.

14. Verfahren nach Anspruch 13, das ferner Folgendes umfasst:
f) Substituieren des Maskenbereichs in den Videobildern (21) mit dem ausgewählten alternativen Bildinhalt (42a, 42b), um modifizierte Videobilder (41) bereitzustellen.

15. Computerlesbares Speichermedium mit darauf aufgezeichneten Anweisungen, die, wenn sie durch einen Computer ausgeführt werden, das Verfahren nach Anspruch 13 oder 14 durchführen.

## Revendications

1. Appareil (40) pour remplacement de contenu d'image, comprenant :
une unité de réception d'image de caméra (44) qui est conçue pour recevoir des images vidéo (21) d'observation d'une scène comprenant un sujet (10) comme une affiche ;
une unité de génération de signal de masque (46) qui est conçue pour générer un signal de masque (43) qui définit des zones de masque des images vidéo (21) correspondant au sujet (10) à remplacer avec un autre contenu d'image (42), comme pour remplacer une publicité originale sur une affiche par une publicité de substitution ;
**caractérisé en ce que** l'appareil comprend en outre :
une unité de sélection d'image (48) qui est conçue pour :
stocker au moins une première autre image (42a) et une seconde autre image (42b), les première et seconde autres images (42a, 42b) étant différentes l'une de l'autre et étant appropriées à différentes conditions dans la scène,
déterminer si une valeur testée (H, Z, W), dérivée d'un signal de télémétrie de caméra (22) ou des images vidéo (21) elles-mêmes est dans une première plage ou une seconde plage, la première plage et la seconde plage étant divisées par une valeur seuil (T_{H}, T_{Z}, T_{W}), et
choisir la première autre image (42a) comme autre contenu d'image (42) lorsque la valeur testée (H, Z, W) est dans la première plage en fonction de la valeur seuil (T_{H}, T_{Z}, T_{W}), et choisir la seconde autre image (42b) comme autre contenu d'image (42) lorsque la valeur testée (H, Z, W) est dans la seconde plage en fonction de la valeur seuil (T_{H}, T_{Z}, T_{W}).

2. Appareil selon la revendication 1, dans lequel l'unité de sélection d'image (48) est conçue pour obtenir la valeur testée (H, Z) à partir d'un signal définissant une taille relative du sujet (10) dans les images vidéo (21) et effectuer un choix parmi les première et seconde autres images (42a, 42b) en fonction de la valeur testée (H, Z) en comparant le signal à la valeur seuil (T_{H}, T_{Z}).

3. Appareil selon la revendication 2, dans lequel le signal est dérivé du signal de masque (43) afin de définir une hauteur relative (H) du sujet (10) dans les images vidéo (21), et est comparé à un seuil de hauteur (T_{H}).

4. Appareil selon la revendication 2, dans lequel le signal est basé sur un signal de télémétrie de caméra (22) représentant une longueur focale (Z) d'une caméra (20) qui observe la scène pour fournir les images vidéo (21), et est comparé à un seuil de longueur focale (T_{z}).

5. Appareil selon l'une quelconque des revendications précédentes, dans lequel l'unité de sélection d'image (48) est conçue pour choisir l'autre contenu d'image (42) à un point de changement de scène des images vidéo (21) .

6. Appareil selon l'une quelconque des revendications précédentes, dans lequel l'unité de sélection d'image (48) est conçue pour choisir la première autre image (42c) lorsque le sujet (10) est détecté comme étant entièrement visible dans les images vidéo (21), et choisir la seconde autre image (42d) lorsque le sujet (10) est détecté comme étant partiellement caché dans les images vidéo (21).

7. Appareil selon l'une quelconque des revendications précédentes, dans lequel l'unité de sélection d'image (48) est conçue pour choisir la première autre image (42e) lorsque le sujet (10) est détecté comme étant entièrement visible dans les images vidéo (21), et choisir la seconde autre image (42f) lorsque le sujet (10) est détecté comme étant incomplet dans une zone de trame des images vidéo (21).

8. Appareil selon la revendication 7, dans lequel l'unité de sélection d'image (48) est conçue pour dériver une valeur de largeur (W) du sujet (10) dans les images vidéo (21) en utilisant le signal de masque (43) à comparer à un seuil de largeur (T_{w}).

9. Appareil selon l'une quelconque des revendications précédentes, dans lequel l'unité de sélection d'image (48) est conçue pour obtenir un signal d'angle de caméra (P, T) définissant un angle relatif d'une caméra (20) par rapport au sujet (10), et pour effectuer un choix parmi les première et seconde autres images (42g, 42h) en fonction du signal d'angle de caméra (P, T).

10. Appareil selon la revendication 9, dans lequel le signal d'angle de caméra (P, T) définit un angle de prise de vue de la caméra (20) qui observe le sujet (10) dans la scène afin de fournir les images vidéo (21), et est dérivé d'un signal de télémétrie de caméra (22) de la caméra (20).

11. Appareil selon la revendication 9 ou 10, dans lequel l'unité de sélection d'image (48) est conçue pour effectuer un choix au moins parmi les première et seconde autres images (42g, 42h) dans une séquence d'images de substitution en fonction du signal d'angle de caméra (P, T).

12. Appareil selon la revendication 9 ou 10, dans lequel l'unité de sélection d'image (48) est conçue pour choisir la première autre image (42i) lorsque le sujet (10) est détecté comme étant essentiellement plan par rapport à un plan d'image des images vidéo (21), et choisir la seconde autre image (42j) lorsque le sujet (10) est détecté comme étant à un angle aigu par rapport au plan d'image des images vidéo (21).

13. Procédé pour utilisation dans le remplacement d'un sujet dans une image vidéo, le procédé consistant à :
a) fournir des images vidéo (21) d'une scène comprenant un sujet (10) comme une affiche avec une publicité originale ;
b) définir une zone de masque des images vidéo (21) correspondant au sujet (10), la zone de masque définissant une zone des images vidéo (21) qui doit être remplacée par un autre contenu d'image (42) comme une publicité de substitution ;
**caractérisé en ce qu'**il consiste à :
c) stocker au moins une première autre image (42a) et une seconde autre image (42b), les première et seconde autres images (42a, 42b) étant différentes l'une de l'autre et étant appropriées à différentes conditions dans la scène ;
d) déterminer si une valeur testée (H, Z, W), dérivée d'un signal de télémétrie de caméra (22) ou des images vidéo (21) est dans une première plage ou une seconde plage en fonction d'une valeur seuil (T_{H}, T_{Z}, T_{W}); et
e) choisir la première autre image (42a) comme autre contenu d'image (42) lorsque la valeur testée (H, Z, W) est dans la première plage en fonction de la valeur seuil (T_{H}, T_{Z}, T_{W}), et choisir la seconde autre image (42b) comme autre contenu d'image (42) lorsque la valeur testée (H, Z, W) est dans la seconde plage en fonction de la valeur seuil (T_{H}, T_{Z}, T_{W}) .

14. Procédé selon la revendication 13, consistant en outre à :
f) remplacer la zone de masque dans les images vidéo (21) par l'autre contenu d'image choisi (42a, 42b) pour fournir des images vidéo modifiées (41).

15. Support de stockage lisible par ordinateur sur lequel sont enregistrées des instructions qui, lorsqu'elles sont exécutées par un ordinateur, exécutent le procédé selon la revendication 13 ou 14.
